# EUROPÄISCHE PATENTSCHRIFT

(11) **EP 0 814 057 B1**
(45) Veröffentlichungstag und Bekanntmachung des Hinweises auf die Patenterteilung: **05.01.2000**
(21) Anmeldenummer: 97106681.6
(22) Anmeldetag: 23.04.1997
(51) Int. Cl.: C01B 35/10, C03C 1/00

(54) **Boroxid-Siliciumdioxid-Mischoxid**
A boric oxide-silicon dioxide mixed oxide
Oxyde mixte oxyde borique-dioxyde de silicium

(30) Priorität: 19.06.1996 DE 19624392
(43) Veröffentlichungstag der Anmeldung: 29.12.1997
(73) Patentinhaber: Degussa-Hüls Aktiengesellschaft, 60287 Frankfurt am Main (DE)
(72) Erfinder: Mangold, Helmut, Dr., 63517 Rodenbach (DE); Ettlinger, Manfred, Dr., 63791 Karlstein (DE); Kerner, Dieter, Dr., Midland Park, New Jersey 07432 (US); Kleinschmit, Peter, Prof., 63457 Hanau (DE)

(56) Entgegenhaltungen:
- FR-A- 2 135 248
- FR-C- 864 685
- CHEMICAL ABSTRACTS, vol. 94, no. 8, 23.Februar 1981 Columbus, Ohio, US; abstract no. 49711n, Seite 143; XP002036991 & JP 80 014 810 B (SHIN-ETSU CHEMICAL INDUSTRY CO., LTD.) 18.April 1980 & DATABASE WPI Week 7713 Derwent Publications Ltd., London, GB; AN 77-22433y & JP 52 019 197 A (SHINETSU CHEM IND CO LTD) , 14.Februar 1977
- "Ullmanns Encyclopädie der technischen Chemie 4. Auflage Band 21" 1982 , VERLAG CHEMIE , WEINHEIM, DE XP002036989 * Seite 464 - Seite 465, Absatz 1 *
- "Ullmans Encyclopädie der technischen Chemie 3. Auflage 15. Band" 1964 , URBAN & SCHWARZENBERG , MUENCHEN, DE XP002036990 * Seite 726, Absatz 1 - Absatz 2 *

## Beschreibung

Die Erfindung betriftt ein Boroxid-Siliciumdioxid-Mischoxid, das Verfahren zu seiner Herstellung und Verwendung.

Das Dokument DE-A 21 22 066 beschreibt für die Anwendung als Füllstoff in Organopolysiloxanmassen (zum Beispiel Springkitte) pyrogen erzeugte Mischoxide des Bors mit Silicium, Aluminium, Titan und/oder Eisen mit einem Bargehalt von 2 bis 20 Gew.-% Bar, berechnet als elementares Bor. Insbesondere enthalten diese Mischoxide 5 bis 10 Gew.-% Bor, berechnet als elementares Bar. Diese Mischoxide können durch Verwendung von Metallen und/oder Metallverbindungen gemäß Ullmanns Enzyclopädie der technischen Chemie, Band 15 (1964), Seite 726, hergestellt werden. Bevorzugt werden sie aus flüchtigen Verbindungen von Bor und Silicium, Aluminium, Titan und/oder Eisen, insbesondere den Chloriden der genannten Elemente in Anwesenheit von in situ gebildetem Wasser bei Temperaturen oberhalb 800 °C, also durch eine Flammenhydrolyse, hergestellt. Die erhaltenen Mischoxide weisen eine BET-Oberflächen von 100 bis 400 m²/g auf.

Gemäß dem Beispiel des Dokumentes DE-A 21 22 066 werden 4,8 kg/h SiCl₄ und 1,2 kg/h Bortrichlorid verdampft und zusammen mit 1,5 m³/h Wasserstoff unter Zufuhr von 4,2 m³/h Luft in einer Brennkammer verbrannt. Die Temperatur in der Brennkammer beträgt mehr als 800 °C. Das erhaltene Mischoxid enthält 82,5 Gew.-% SiO₂ und 17,5 Gew.-% B₂O₃ (= 5 Gew.-% Bor) berechnet als Bar und weist eine BET-Oberfläche von 180 m²/g auf.

Das bekannte Boroxid-Siliciumdioxid-Mischaxid hat den Nachteil, daß es in sehr feinteiliger Form mit einer BET-Oberfläche größer als 100 m²/g anfällt. Es ist für die Verwendung als Glasrohstoff nicht geeignet.

Das bekannte Verfahren hat den Nachteil, daß als Ausgangsmaterial für das Boroxid Bortrichlorid eingesetzt wird. Bortrichlorid ist eine giftige Verbindung mit einem Siedepunkt von 12,5 °C. Bei der Verwendung bel Raumtemperatur sind daher besondere Vorsichtsmaßnahmen notwendig. Als Nebenbestandteil kann das kommerziell erhältliche Bortrichlorid merkliche Mengen an giftigem Phosgen enthalten.

Es besteht somit die Aufgabe, ein Boroxid-Siliciumdioxid-Mischoxid herzustellen, welches diese Nachteile nicht aufweist.

Gegenstand der Erfindung ist ein Boroxid-Siliciumdioxid-Mischoxid, weiches dadurch gekennzeichnet ist, daß es eine BET-Oberfläche kleiner 100 m²/g, vorzugsweise 10 bis 80 m²/g, insbesondere 25 bis 50 m²/g, aufweist.

Der Anteil an Boroxid kann 0,01 bis 40 Gew.-% betragen.

In einer weiteren Ausgestaltung der Erfindung kann das Boroxid-Siliciumdioxid-Mischoxid ein weiteres Oxid oder weitere Oxide von Metallen und/oder Metalloide als Bestandteil des Mischoxides enthalten.

Derartige Metalle oder Metalloide können Aluminium, Titan oder Zirkon sein.

In einer bevorzugten Ausführungsform können die erfindungsgemäßen Boroxid-Siliciumdioxid-Mischoxide auf pyrogenem Wege hergestellt sein.

Dabei kann das bekannte Verfahren der Flammenhydrolyse bevorzugt angewandt werden. Dieses Verfahren wird beschrieben in Ullmanns Enzyclopädie der technischen Chemie, 4. Auflage, Band 21 (1982), Seiten 464 und 465.

Das erfindungsgemäße Boroxid-Siliciumdioxid-Mischoxid mit einer BET-Oberfläche von kleiner 100 m²/g, vorzugsweise 10 bis 80 m²/g, insbesondere 25 bis 50 m²/g, kann hergestellt werden, indem man Siliconhalogenide und/oder Organosilikonhalogenide, wie zum Beispiel Methyltrichlorsilan, vorzugsweise das Chlorid SiCl₄ mit der verdampfbaren Borverbindung Borsäuretrimethylester getrennt oder gemeinsam, gegebenenfalls unter Zusatz von verdampfbaren Verbindungen der Metalloide und/oder Metalle Aluminium, Titan, Zirkon, wie zum Beispiel AlCl₃, ZrCl₄, TiCl₄ o. ä., verdampft, die Dämpfe mit einem Traggas, wie zum Beispiel Luft und/oder Stickstoff, in einer Mischeinheit, vorzugsweise in einem Brenner bekannter Bauart mit Wasserstoff sowie Luft und gegebenenfalls weiteren Gasen, wie Sauerstoff und stickstoff, mischt, die Gase in einer Flamme miteinander zur Reaktion bringt, anschließend die heißen Gase und den, Feststoff abkühlt, die Gase von dem Feststoff abtrennt und gegebenenfalls am Produkt anhaftende Halogenid- oder Rohstoffreste durch eine Wärmebehandlung mit befeuchteter Luft entfernt.

Das erfindungsgemäße Verfahren hat den Vorteil, daß der eingesetzte Borsäuretrimethylester in jedem Verhältnis mit SiCl₄ mischbar ist. Eine genaue Abstimmung des Verhältnisses ist somit möglich. Da sein Siedepunkt von 68 °C nahe genug an dem Siedepunkt des Siliciumtetrachlorides liegt, kann Borsäuretrimethylester gemeinsam mit Siliciumtetrachlorid aus einer Verdampferanlage verdampft werden.

Das erfindungsgemäße Boroxid-Siliciumdioxid-Mischoxid, die gegebenenfalls auch TiO₂, Al₂O₃ und/oder ZrO₂ enthalten können, können zur Herstellung von hochreinen Gläsern eingesetzt werden. Von besonderem Vorteil ist dabei die hohe Reinheit und die abgestimmte Teilchenfeinheit des erfindungsgemäßen Mischoxides.

### Beispiele

### Herstellung von Boroxid-Siliciumdioxid-Mischoxid (Beispiele 1 bis 4)

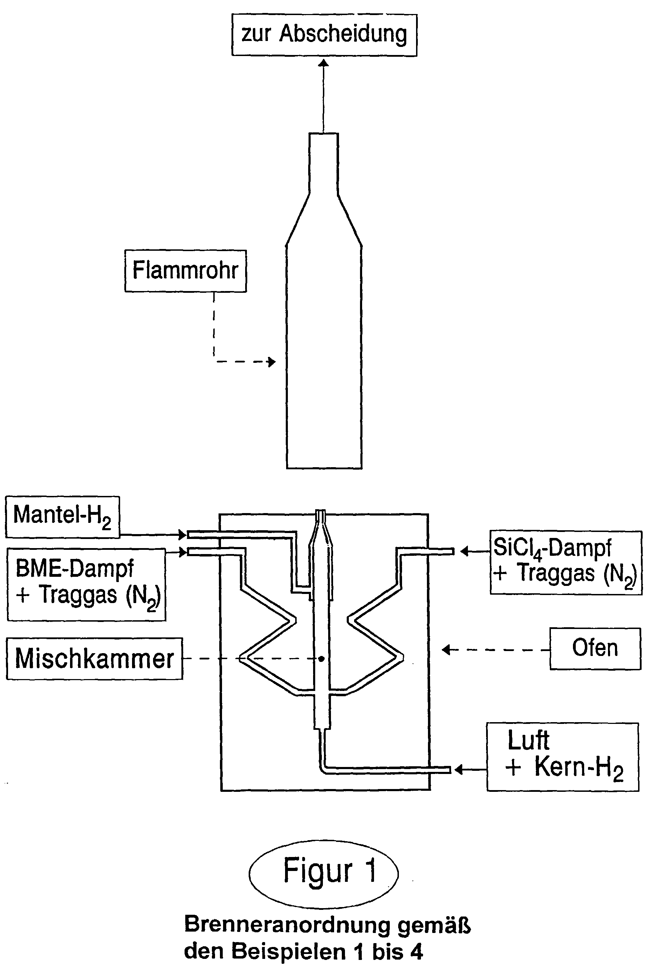

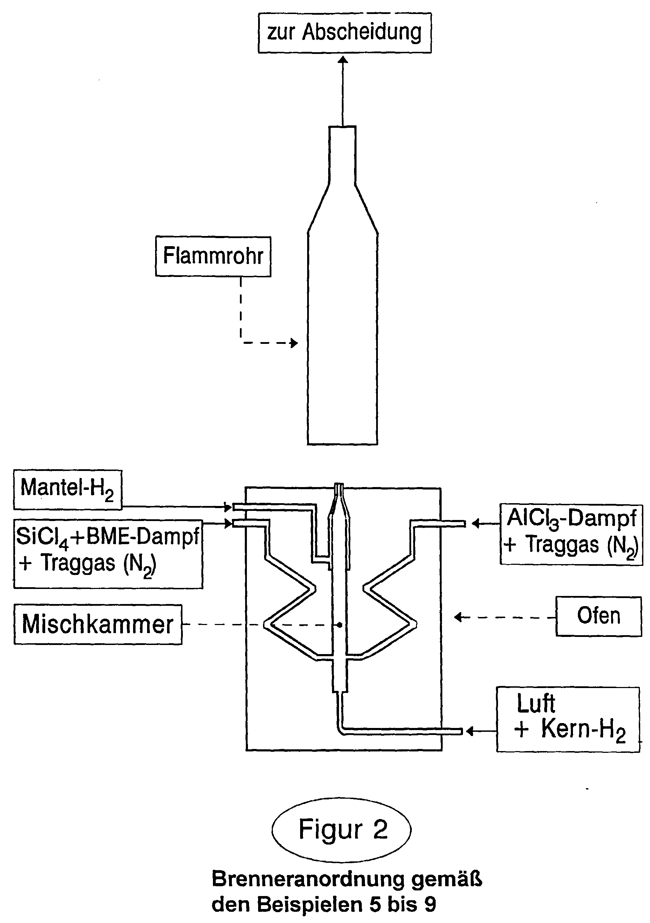

Die Brenneranordnung für die Beispiele 1 bis 4 ist schematisch in Figur 1 dargestellt.

Der Brenner befindet sich in einem beheizten Ofenteil, die Temperatur des Ofens entspricht in etwa der Ausströmtemperatur des Gasgemisches. Der Brenner besteht aus einer Mischkammer, an die sich eine Düse, aus der das Gasgemisch ausströmt, anschließt, sowie eine um diese Düse ringförmig liegende zweite (Mantel-)Düse, aus der zur Vermeidung von Anbackungen (im Düsenbereich) zusätzlich (Mantel-)Wasserstoff in die Flamme geblasen wird.

### Beispiel 1

1,0796 kg/h SiCl₄ werden bei ca. 130 °C verdampft und mit 0,1 Nm³/h Stickstoff als Traggas in die Mischkammer des Brenners überführt. In die gleiche Mischkammer werden 0,51 Nm³/h Luft sowie 0,107 Nm³/h Sauerstoff und 0,3 Nm³/h (Kern-)Wasserstoff eingespeist.

In einer separaten Verdampfungsvorrichtung werden 0,0643 kg/h Borsäuretrimethylester bei Ca. 120 °C verdampft und unter Anlegen eines Stickstoffstromes (0,02 Nm³/h) ebenfalls in die Mischkammer des Brenners eingespeist. Das Gasgemisch strömt mit einer Geschwindigkeit von 12 m/sec (bezogen auf Normbedingungen) aus der Düsenöffnung des Brenners und brennt in eine Reaktionskammer (Flammrohr).

Am Brennermund wird die Temperatur des Gasgemisches (SiCl₄-Luft-Wasserstoff, Sauerstoff, Borsäuretrimethylester) gemessen; sie beträgt 128 °C. In die den Brennermund umgebende Ringdüse werden 0,05 Nm³/h Wasserstoff (Manteiwasserstoff, Raumtemperatur) eingespeist.

Nach der Flammenhydrolyse werden die Reaktionsgase und das Boroxid-Siliciumdioxid-Mischoxid durch Anlegen eines Unterdruckes durch ein Kühlsystem gesaugt und dabei auf ca. 100 bis 160 °C abgekühlt. In einem Filter wird der Feststoff von dem Abgasstrom abgetrennt. Das Boroxid-Siliciumdioxid-Mischoxid fällt als weißes feinteiliges Pulver an.

Die spezifische Oberfläche beträgt 45 m²/g, der analytisch bestimmte Gehalt an B₂O₃ beträgt 4,2 Gew.-% (= 1,3 Gew.-% Bor, berechnet als Bor).

Die Einstellparameter sind in Tabelle 1 zusammengefaßt.

### Beispiel 2

Man verfährt wie unter Beispiel 1 angegeben und verwendet folgende Mengen:

0,9387 kg/h SiCl₄ mit 0,1 Nm³/h Stickstoff als Traggas, Luft 0,76 Nm³/h, Sauerstoff 0,159 Nm³/h, (Kern-)Wasserstoff 0,268 Nm³/h.

In die den Brennermund umschließende Ringdüse werden 0,05 Nm³/h Wasserstoff eingespeist. Das Gasgemisch strömt mit einer Geschwindigkeit von 14 m/sec (bezogen auf Normbedingungen) aus der Düsenöffnung des Brenners.

In einer separaten Verdampfungsvorrichtung werden 0,1777 kg/h Borsäuretrimethylester verdampft und unter Anlegen eines Stickstoffstromes (0,02 Nm³/h) ebenfalls in die Mischkammer des Brenners eingespeist.

Die spezifische Oberfläche des Boroxid-Siliciumdioxid-Mischoxides beträgt 34 m²/g, der analytisch bestimmte Gehalt an B₂O₃ beträgt 13,3 Gew.-% (= 4,1 Gew.-% Bor, berechnet als Bor).

Die Einstellparameter sind nochmals in Tabelle 1 zusammengefaßt:

Das erhaltene Boroxid-Siliciumdioxid weist die folgende Teilchengrößenverteilung auf:

| | | |
|---|---|---|
| Gesamtteilchenzahl | (N) | 3223. |
| Teilchendurchmesser, arithm. Mittel | (DN) | 45.72 (NM) |
| Teilchendurchmesser, über Oberfl. gemittelt | (DA) | 60.81 (NM) |

| Prozentuale Verteilung | | | | |
|---|---|---|---|---|
| **Durchmesser D (NM)** | **Anzahl N** | **Anzahl% N%** | **Summe Anzahl% SN%** | **Summe Gewichts% SND3%** |
| 7.450 | 40. | 1.241 | 1.241 | 0.003 |
| 10.210 | 123. | 3.816 | 5.057 | 0.030 |
| 12.970 | 155. | 4.809 | 9.867 | 0.099 |
| 15.730 | 105. | 3.258 | 13.124 | 0.182 |
| 18.490 | 56. | 1.738 | 14.862 | 0.254 |
| 21.250 | 64. | 1.986 | 16.848 | 0.380 |
| 24.010 | 64. | 1.986 | 18.833 | 0.560 |
| 26.770 | 78. | 2.420 | 21.253 | 0.865 |
| 29.530 | 98. | 3.041 | 24.294 | 1.379 |
| 32.290 | 86. | 2.668 | 26.962 | 1.970 |
| 35.050 | 109. | 3.382 | 30.344 | 2.926 |
| 37.810 | 127. | 3.940 | 34.285 | 4.325 |
| 40.570 | 173. | 5.368 | 39.652 | 6.680 |
| 43.330 | 198. | 6.143 | 45.796 | 9.963 |
| 46.090 | 193. | 5.988 | 51.784 | 13.814 |
| 48.850 | 191. | 5.926 | 57.710 | 18.352 |
| 51.610 | 178. | 5.523 | 63.233 | 23.339 |
| 54.370 | 160. | 4.964 | 68.197 | 28.580 |
| 57.130 | 153. | 4.747 | 72.944 | 34.395 |
| 59.890 | 135. | 4.189 | 77.133 | 40.306 |
| 62.650 | 140. | 4.344 | 81.477 | 47.322 |
| 65.410 | 113. | 3.506 | 84.983 | 53.767 |
| 68.170 | 109. | 3.382 | 88.365 | 60.805 |
| 70.930 | 86. | 2.668 | 91.033 | 67.060 |
| 73.690 | 64. | 1.986 | 93.019 | 72.280 |
| 76.450 | 52. | 1.613 | 94.632 | 77.015 |
| 79.210 | 43. | 1.334 | 95.966 | 81.371 |
| 81.970 | 26. | 0.807 | 96.773 | 84.289 |
| 84.730 | 28. | 0.869 | 97.642 | 87.761 |
| 87.490 | 26. | 0.807 | 98.449 | 91.310 |
| 90.250 | 22. | 0.683 | 99.131 | 94.606 |
| 93.010 | 10. | 0.310 | 99.442 | 96.246 |
| 95.770 | 3. | 0.093 | 99.535 | 96.783 |
| 98.530 | 5. | 0.155 | 99.690 | 97.757 |
| 101.290 | 3. | 0.093 | 99.783 | 98.393 |
| 104.050 | 7. | 0.217 | 100.000 | 100.000 |

| | |
|---|---|
| DN = | 45.72 |
| DA = | 60.81 |
| D50 = | 45.27 |
| K = | 4 |
| A(K) = | 0.1247 |
| FQS = | 1.7246 |
| DN/D50 = | 1.0100 |
| DA/D50 = | 1.3434 |
| DA/DN = | 1.3301 |

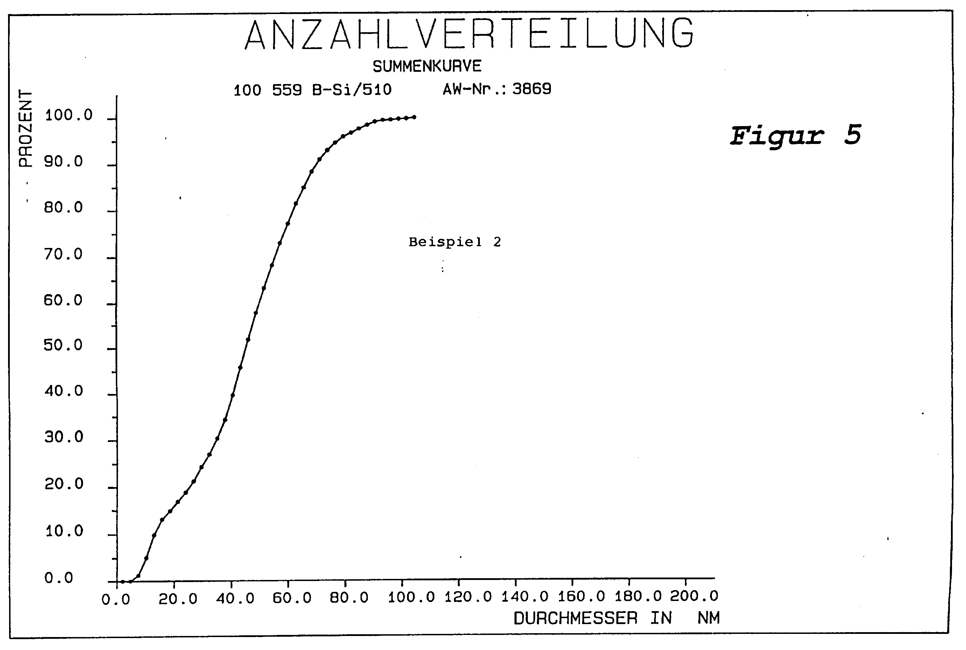

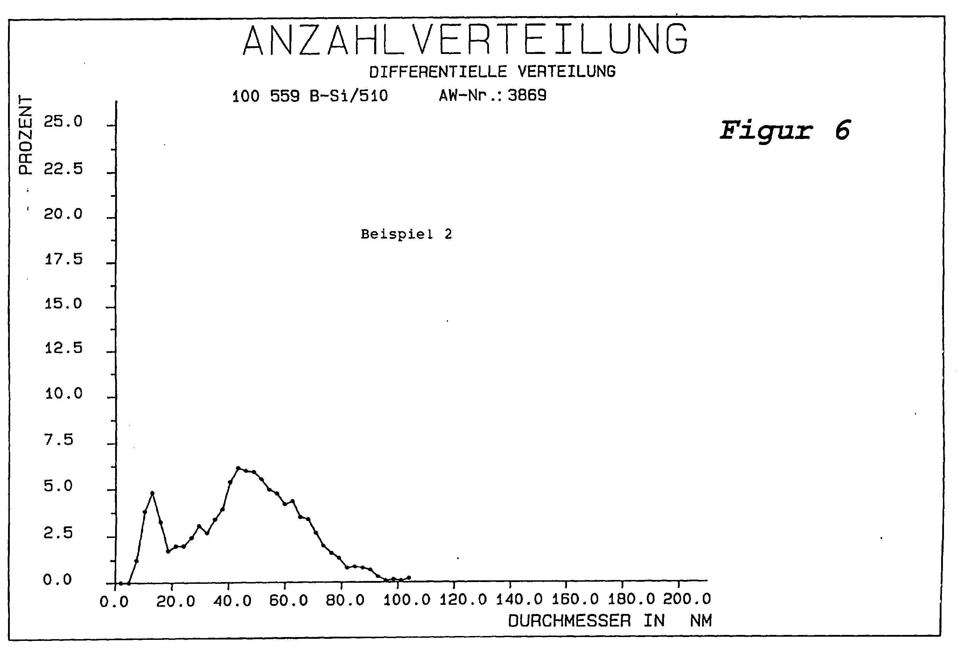

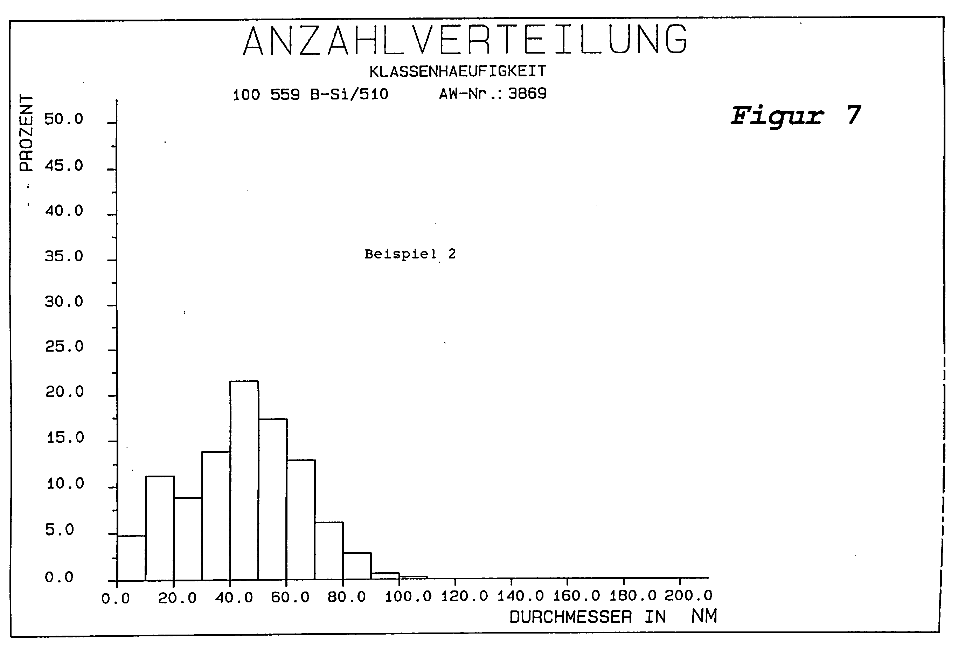

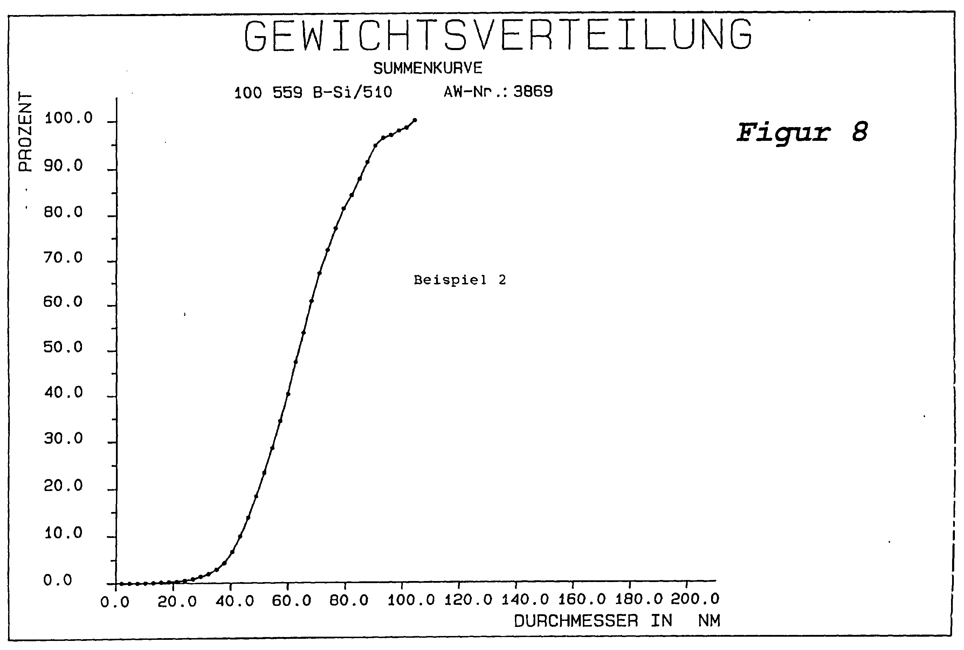

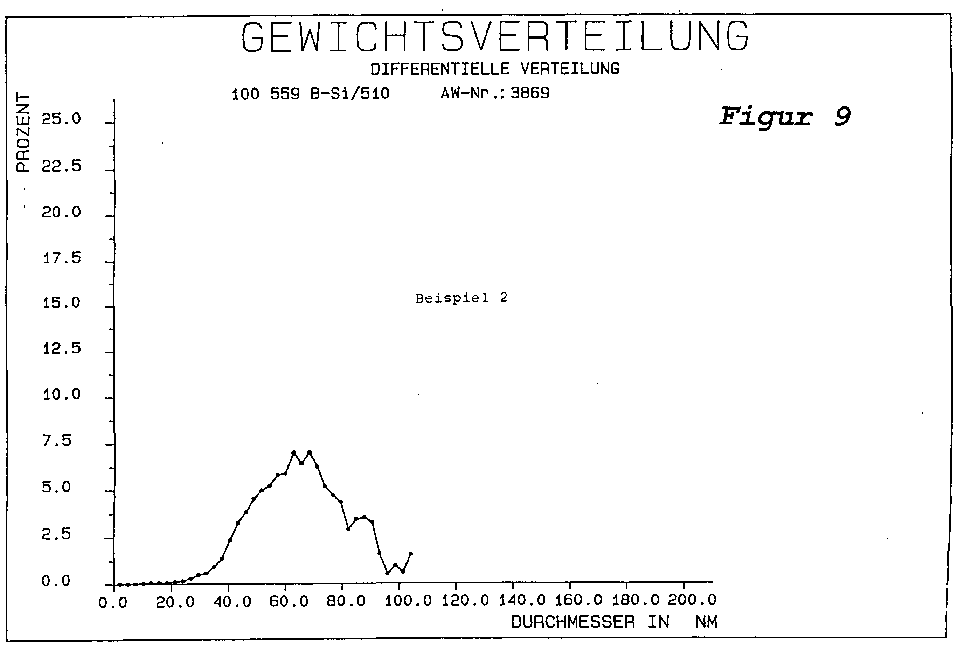

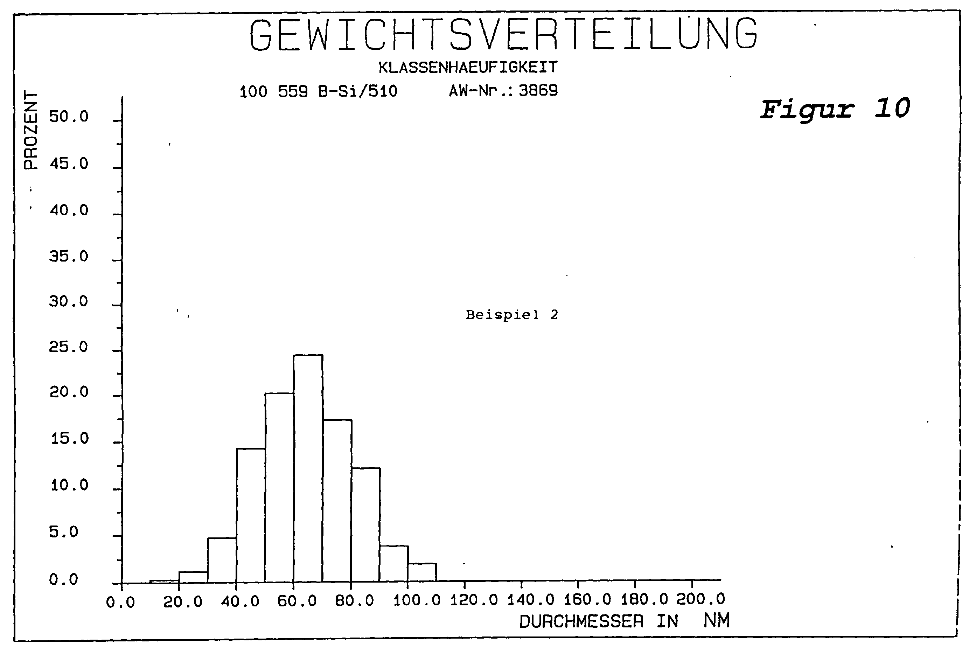

Diese Daten sind in den Figuren 5 bis 10 graphisch dargestellt. Es zeigen:
Figur 5 die Summenkurve der Anzahlverteilung
Figur 6 die differentielle Kurve der Anzahlverteilung
Figur 7 die Klassenhäufigkeit der Anzahlverteilung
Figur 8 die Summenkurve der Gewichtsverteilung
Figur 9 die differentielle Kurve der Gewichtsverteilung
Figur 10 die Klassenhäufigkeit der Gewichtsverteilung

### Beispiel 3

Man verfährt wie unter Beispiel 1 angegeben und verwendet folgende Mengen:

0,5005 kg/h SiCl₄ mit 0,1 Nm³/h Stickstoff als Traggas, Luft 0,726 Nm³/h, Sauerstoff 0,152 Nm³/h, (Kern-) Wasserstoff 0,14 Nm³/h.

In die den Brennermund umschließende Ringdüse werden 0,05 Nm³/h Wasserstoff eingespeist. Das Gasgemisch strömt mit einer Geschwindigkeit von 12 m/sec (bezogen auf Normbedingungen) und mit einer Temperatur von 124 °C aus der Düsenöffnung des Brenners.

In einer separaten Verdampfungsvorrichtung werden 0,225 kg/h Borsäuretrimethylester verdampft und unter Anlegen eines Stickstoffstromes (0,02 Nm³/h) ebenfalls in die Mischkammer des Brenners eingespeist.

Die spezifische Oberfläche des Boroxid-Siliciumdioxid-Mischoxides betragt 39 m²/g, der analytisch bestimmte Gehalt an B₂O₃ beträgt 23,0 Gew.-% (= 7,1 Gew.-% Bor, berechnet als Bar).

Die Einstellparameter sind nochmals in Tabelle 1 zusammengefaßt.

### Beispiel 4

Man verfährt wie unter Beispiel 1 angegeben und verwendet folgende Mengen:

0,365 kg/h SiCl₄ mit 0,1 Nm³/h Stickstoff als Traggas, Luft 0,759 Nm³/h, Sauerstoff 0,159 Nm³/h, Wasserstoff 0,103 Nm³/h.

In die den Brennermund umschließende Ringdüse werden 0,05 Nm³/h Wasserstoff eingespeist.

In einer separaten Verdampfungsvorrichtung werden 0,2575 kg/h Borsäuretrimethylester verdampft und unter Anlegen eines Stickstoffstromes (0,02 Nm³/h) ebenfalls in die Mischkammer des Brenners eingespeist.

Das Gasgemisch strömt mit einer Geschwindigkeit von 12 m/sec (bezogen auf Normbedingungen) und mit einer Temperatur von 125 °C aus der Düsenöffnung des Brenners.

Die spezifische Oberfläche des Boroxid-Siliciumdioxid-Mischoxides betragt 30 m²/g, der analytisch bestimmte Gehalt an B₂O₃ betragt 29,0 Gew.-% (= 9,0 Gew.-% Bor, berechnet als Bor).

Die Einstellparameter sind nochmals in Tabelle 1 zusammengefaßt.

**Tabelle 1**

| Experimentelle Bedingungen und daraus errechnete Flammenparameter bei der Herstellung pyrogener Boroxid-Siliciuxndioxid-Mischoxide | | | | | | | | | | |
|---|---|---|---|---|---|---|---|---|---|---|
| Nr. | SiCl₄ [kg/h] | BME [kg/h] | Luft [Nm³/h] | O₂ [Nm³/h][Nm³/h] | H₂Kern | N₂Kern [Nm³/h] | gamma [-] | lambda [-] | BET [m²/g] | B₂O₃ [Gew.-%] |
| 1 | 1,0796 | 0,0643 | 0,510 | 0,107 | 0,300 | 0,12 | 1,27 | 1,01 | 45 | 4,2 |
| 2 | 0,9387 | 0,1777 | 0,760 | 0,159 | 0,268 | 0,12 | 1,78 | 1,03 | 34 | 13,3 |
| 3 | 0,5005 | 0,2250 | 0,726 | 0,152 | 0,140 | 0,12 | 2,72 | 1,04 | 39 | 23,0 |
| 4 | 0,3651 | 0,2575 | 0,759 | 0,159 | 0,103 | 0,12 | 3,67 | 1,04 | 30 | 29,0 |

- BME =: Borsäuretrimethylester B(OCH₃)₃
- Verhältnis H₂ gamma =: Verhältnis von eingespeistem Wasserstoff in Kern (den in BME enthaltenen Wasserstoff mitberücksichtigend) zu stöchiometrisch benötigtem Wasserstoff
- Verhältnis O₂ lambda =: Verhältnis von eingespeistem Sauerstoff (Luftsauerstoff + zusätzlich eingespeistem O₂) im Brenner zu stöchiometrisch benötigtem Sauerstoff.

### Entsäuerung bzw. Rohstoffrestentfernung

Zur Entfernung von an Produkt noch anhaftenden möglicherweise nicht vollständig umgesetzten Rohstoffresten bzw. zur Reduzierung des Chloridgehaltes der Proben können die nach den Beispielen 1 bis 9 hergestellten Oxide einem weiteren Temperaturbehandlungsschritt unterzogen werden.

Dabei werden in einer Gegenstromfallrohranordnung bei Temperaturen zwischen 400 und 700 °C (bevorzugt bei 650 °C) die Pulver mit befeuchteter Luft behandelt (Entsauerung).

In den Tabellen 2 und 3 sind die Analysendaten der nach den Beispielen 1 bis 4 hergestellten Pulver vor und nach der Entsäuerung zusammengefaßt.

**Tabelle 2**

| Analytische Daten der nach Beispiel 1 bis 4 erhaltenen Proben (B-Si-Mischoxid) | | | | | | | | | | |
|---|---|---|---|---|---|---|---|---|---|---|
| | **Vor Entsäuerung** | | | | | **Nach Entsäuerung** | | | | |
| Nr. | BET m²/g | B₂O₃ Gew.-% | TV Gew.-% | GV Gew.-%; | Cl-Gehalt ppm | BET m²/g | B₂O₃ Gew.-% | TV Gew.-% | GV Gew.-% | Cl-Gehalt ppm |
| 1 | 45 | 4,2 | 1,5 | 0,4 | 200 | 46 | 3,6 | 0,6 | 0,1 | 138 |
| 2 | 34 | 13,3 | 1,8 | 2,7 | 142 | 37 | 10,1 | 0,4 | 1,5 | 87 |
| 3 | 39 | 23,0 | 0,8 | 3,1 | 87 | 44 | 22,2 | 0,5 | 2,5 | 18 |
| 4 | 30 | 29,0 | 1,0 | 3,8 | 48 | 33 | 28,6 | 0,7 | 1,3 | 13 |

- TV =: Trocknungsverlust (2 h bei 105 °C, in Anlehnung an DIN/ISO 787/II, ASTM D 280, JIS K 5101/21).
- GV =: Glühverlust (2 h bei 1000 °C, in Anlehnung an DIN 55921, ASTM D 1208, JIS K 5101/23, bezogen auf die 2 h bei 105 °C getrocknete Substanz).

**Tabelle 3**

| Weitere analytische Daten der nach Beispiel 1 bis 4 erhaltenen Proben (B-Si-Mischoxid) | | | | | | | | |
|---|---|---|---|---|---|---|---|---|
| **Vor Entsäuerung** | | | | | **Nach Entsäuerung** | | | |
| Nr. | BET m²/g | pH | Schütt-dichte g/l | Stampf-dichte g/l | BET m²/g | pH | Schütt-dichte g/l | Stampf-dichte g/l |
| 1 | 45 | 3,84 | 58 | 69 | 46 | 4,09 | 88 | 113 |
| 2 | 34 | 3,89 | 46 | 52 | 37 | 3,93 | 91 | 115 |
| 3 | 39 | 3,69 | 39 | 46 | 44 | 3,88 | 69 | 87 |
| 4 | 30 | 3,52 | 41 | 48 | 33 | 3,88 | 94 | 118 |

- pH =: pH-Wert in 4-prozentiger wäßriger Suspension.

Stampfdichte in Anlehnung an DIN/ISO 787/XI, JIS K 5101/18 (nicht gesiebt).

### Beispiele zur Herstellung von Boroxid-Aluminiumoxid-Siliciumdioxid-Mischoxid

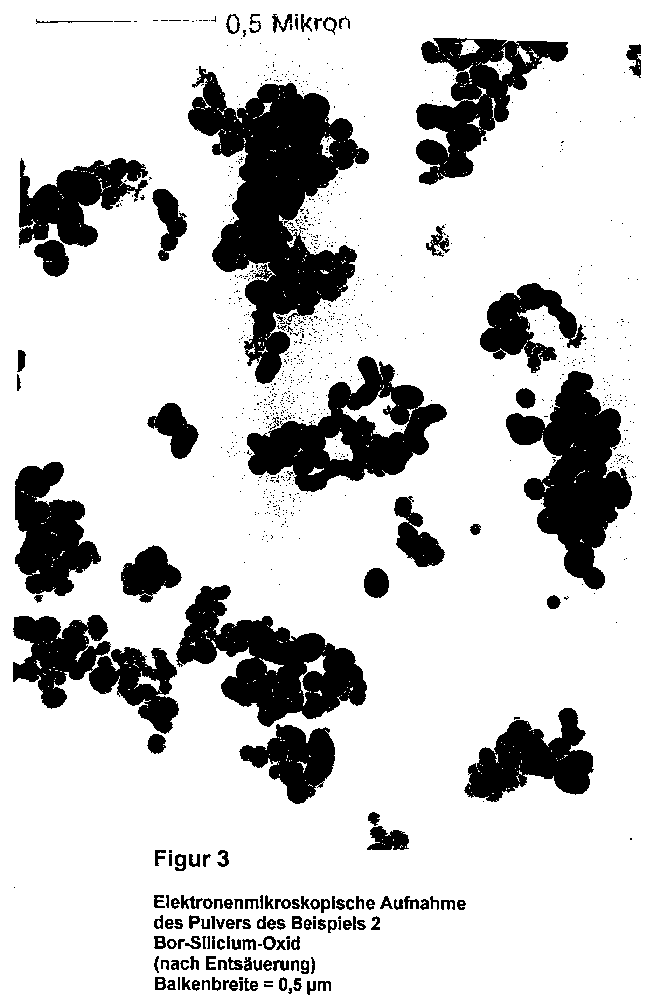

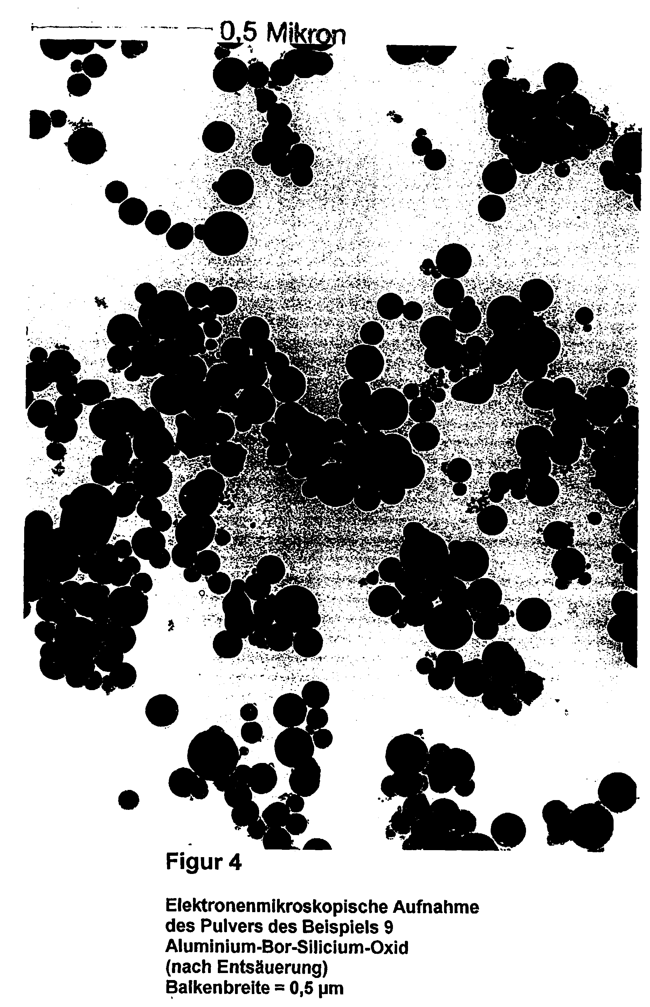

Die Brenneranordnung für die Beispiele 5 bis 9 ist schematisch in Figur 2 dargestellt.

### Beispiel 5

Die beiden Flüssigkeiten SiCl₄ und Borsäuretrimethylester werden im gewünschten Verhältnis vor der Verdampfung gemischt und dann gemeinsam in einem Verdampfer bei Ca. 135 °C in die Gasphase überführt. Es werden 0,876 kg/h SiCl₄ gemeinsam mit 0,231 kg/h Borsäuretrimethylester verdampft. Die Gase werden mit einem Stickstoffstrom von 0,120 Nm³/h in die Mischkammer des in Beispiel 1 genannten Brenners geleitet.

Die Temperatur des Ofens, in dem sich der Brenner befindet, beträgt ca. 240 °C.

In einem separaten Verdampfer werden bei Temperaturen von Ca. 230°C 0,056 kg/h AlCl₃ verdampft und mit einem Traggasstrom von 0,120 Nm³/h Stickstoff enbenfalls in die Mischkammer dieses Brenners überführt.

In die Brennermischkammer werden 0,938 Nm³/h Luft sowie 0,196 Nm³/h Sauerstoff und 0,254 Nm³/h Wasserstoff eingebracht.

Das Gasgemisch strömt mit einer Geschwindigkeit von 17 m/sec (bezogen auf Normbedingungen) aus der Düsenöffnung des Brenners und brennt in eine Reaktionskammer (Flammrohr).

Am Brennermund wird die Temperatur des Gasgemisches (SiCl₄, AlCl₃, Luft, Wasserstoff, Sauerstoff, Borsäuretrimethylester) gemessen; sie betragt 235 °C. In die den Brennermund umgebende Ringdüse werden 0,05 Nm³/h Wasserstoff (Mantelwasserstoff, Raumtemperatur) eingespeist.

Nach der Flammenhydrolyse werden die Reaktionsgase und das Boroxid-Siliciumoxid-Aluminiumoxid-Mischoxid durch Anlegen eines Unterdruckes durch ein Kühlsystem gesaugt und dabei auf ca. 100 bis 160 °C abgekühlt. In einem Filter wird der Feststoff von dem Abgasstrom abgetrennt. Der Feststoff (Boroxid-Aluminiumoxid-Siliciumoxid-Mischoxid) fällt als weißes feinteiliges Pulver an.

Die spezifische Oberfläche des Boroxid-Aluminiumoxid-Siliciumoxid-Mischoxids betragt 28 m²/g, der analytisch bestimmte Gehalt an B₂O₃ beträgt 12,3 Gew.-% (≙ 3,8 Gew.-% Bor), der analytisch bestimmte Gehalt an Al₂O₃ beträgt 3,9 Gew.-%.

### Beispiel 6

Man verfährt wie in Beispiel 5 beschrieben; es kommen dabei folgende Mengen zum Einsatz:

0,83 kg/h SiCl₄ werden gemeinsam mit 0,219 kg/h Borsäuretrimethylester verdampft und mit einem Stickstoffstrom von 0,120 Nm³/h in die Mischkammer des in Beispiel 1 genannten Brenners geleitet. In einem separaten Verdampfer werden bei Temperaturen von ca. 240°C 0,108 kg/h AlCl₃ verdampft und mit einem Traggasstrom von 0,120 Nm³/h Stickstoff in die Mischkammer dieses Brenners überführt.

In die gleiche Mischkammer werden 0,782 Nm³/h Luft sowie 0,164 Nm³/h Sauerstoff und 0,255 Nm³/h Wasserstoff eingebracht.

Die Gasausgangstemperatur am Brennermund beträgt 235 °C.

Nach der Flammenhydrolyse bzw. -oxidation und Abtrennung der gasförmigen Reaktionsgase erhält man ein Boroxid-Aluminiumoxid-Siliciumoxid-Mischoxid mit einer BET-Oberfläche von 30 m²/g, wobei der analytisch bestimmte Gehalt an B₂O₃ 13,9 Gew.-% (≙ 4,3 Gew.-% Bor) und der analytisch bestimmte Gehalt an Al₂O₃ 8,3 Gew.-% beträgt.

### Beispiel 7

Man verfährt wie in Beispiel 5 beschrieben; es kommen dabei folgende Mengen zum Einsatz:

0,788 kg/h SiCl₄ werden gemeinsam mit 0,208 kg/h Borsäuretrimethylester verdampft und mit einem Stickstoffstrom von 0,120 Nm³/h in die Mischkammer des in Beispiel 1 genannten Brenners geleitet. In einem separaten Verdampfer werden bei Temperaturen von ca. 240°C 0,151 kg/h AlCl₃ verdampft und mit einem Traggasstrom von 0,120 Nm³/h in die Mischkammer dieses Brenners überführt.

In die gleiche Mischkammer werden 0,762 Nm³/h Luft sowie 0,160 Nm³/h Sauerstoff und 0,257 Nm³/h Wasserstoff eingebracht.

Die Gasausgangstemperatur am Brennermund beträgt 235 °C.

Nach der Flammenhydrolyse und Abtrennung der gasförmigen Reaktionsgase erhält man ein Boroxid-Aluminiumoxid-Siliciumoxid-Mischoxid mit einer BET-Oberfläche von 37 m²/g, wobei der analytisch bestimmte Gehalt an B₂O₃ 14,3 Gew.-% (≙ 4,4 Gew.-% Bor) und der analytisch bestimmte Gehalt an Al₂O₃ 12,9 Gew.-% beträgt.

### Beispiel 8

Man verfährt wie in Beispiel 5 beschrieben; es kommen dabei folgende Mengen zum Einsatz:

0,721 kg/h SiCl₄ werden gemeinsam mit 0,190 kg/h Borsäuretrimethylester verdampft und mit einem Stickstoffstrom von 0,120 Nm³/h in die Mischkammer des in Beispiel 1 genannten Brenners geleitet. In einem separaten Verdampfer werden bei Temperaturen von ca. 240°C 0,232 kg/h AlCl₃ verdampft und mit einem Traggasstrom von 0,120 Nm³/h in die Mischkammer dieses Brenners überführt.

In die gleiche Mischkammer werden 0,842 Nm³/h Luft sowie 0,176 Nm³/h Sauerstoff und 0,259 Nm³/h Wasserstoff eingebracht.

Die Gasausgangstemperatur am Brennermund betragt 235 °C.

Nach der Flammenhydrolyse und Abtrennung der gasförmigen Reaktionsgase erhält man ein Boroxid-Aluminiumoxid-Siliciumoxid-Mischoxid mit einer BET-Oberfläche von 29 m²/g, wobei der analytisch bestimmte Gehalt an B₂O₃ 14,6 Gew.-% (≙ 4,5 Gew.-% Bor) und der analytisch bestimmte Gehalt an Al₂O₃ 19,3 Gew.-% betragt.

### Beispiel 9

Man verfährt wie in Beispiel 5 beschrieben; es kommen dabei folgende Mengen zum Einsatz:

0,641 kg/h SiCl₄ werden gemeinsam mit 0,169 kg/h Borsäuretrimethylester verdampft und mit einem Stickstoffstrom von 0,120 Nm³/h in die Mischkammer des in Beispiel 5 genannten Brenners geleitet. In einem separaten Verdampfer werden bei Temperaturen von Ca. 240°C 0,321 kg/h AlCl₃ verdampft und mit einem Traggasstrom von 0,120 Nm³/h in die Mischkammer dieses Brenners überführt.

In die gleiche Mischkammer werden 0,800 Nm³/h Luft sowie 0,167 Nm³/h Sauerstoff und 0,261 Nm³/h Wasserstoff eingebracht.

Die Gasausgangstemperatur am Brennermund beträgt 235 °C.

Nach der Flammenhydrolyse und Abtrennung der gasförmigen Reaktionsgase erhält man ein Boroxid-Aluminiumoxid-Siliciumdioxid-Mischoxid mit einer BET-Oberfläche von 37 m²/g, wobei der analytisch bestimmte Gehalt an B₂O₃ 12,9 Gew.-% (≙ 4,0 Gew.-% Bor) und der analytisch bestimmte Gehalt an Al₂O₃ 29,0 Gew.-% beträgt.

Das erhaltene Boroxid-Aluminiumoxid-Siliciumdioxid-Mischoxid weist die folgende Teilchengrößenverteilung auf:

| | | |
|---|---|---|
| Gesamtteilchenzahl | (N) | 4349. |
| Teilchendurchmesser, arithm. Mittel | (DN) | 77.66 (NM) |
| Teilchendurchmesser, über Oberfl. gemittelt | (DA) | 101.81 (NM) |

| Prozentuale Verteilung | | | | |
|---|---|---|---|---|
| **Durchmesser D (NM)** | **Anzahl N** | **Anzahl% N%** | **Summe Anzahl% SN%** | **Summe Gewichts% SND3%** |
| 14.900 | 367. | 8.439 | 8.439 | 0.038 |
| 20.420 | 90. | 2.069 | 10.508 | 0.062 |
| 25.940 | 53. | 1.219 | 11.727 | 0.092 |
| 31.460 | 47. | 1.081 | 12.808 | 0.138 |
| 36.980 | 54. | 1.242 | 14.049 | 0.224 |
| 42.500 | 95. | 2.184 | 16.234 | 0.454 |
| 48.020 | 143. | 3.288 | 19.522 | 0.953 |
| 53.540 | 198. | 4.553 | 24.074 | 1.912 |
| 59.060 | 214. | 4.921 | 28.995 | 3.302 |
| 64.580 | 255. | 5.863 | 34.859 | 5.468 |
| 70.100 | 293. | 6.737 | 41.596 | 8.650 |
| 75.620 | 315. | 7.243 | 48.839 | 12.946 |
| 81.140 | 297. | 6.829 | 55.668 | 17.949 |
| 86.660 | 306. | 7.036 | 62.704 | 24.230 |
| 92.180 | 300. | 6.898 | 69.602 | 31.640 |
| 97.700 | 278. | 6.392 | 75.994 | 39.815 |
| 103.220 | 248. | 5.702 | 81.697 | 48.416 |
| 108.740 | 176. | 4.047 | 85.744 | 55.553 |
| 114.260 | 123. | 2.828 | 88.572 | 61.339 |
| 119.780 | 129. | 2.966 | 91.538 | 68.330 |
| 125.300 | 84. | 1.931 | 93.470 | 73.541 |
| 130.820 | 86. | 1.977 | 95.447 | 79.613 |
| 136.340 | 64. | 1.472 | 96.919 | 84.728 |
| 141.860 | 42. | 0.966 | 97.885 | 88.509 |
| 147.380 | 29. | 0.667 | 98.551 | 91.436 |
| 152.900 | 25. | 0.575 | 99.126 | 94.254 |
| 158.420 | 15. | 0.345 | 99.471 | 96.135 |
| 163.940 | 8. | 0.184 | 99.655 | 97.247 |
| 169.460 | 4. | 0.092 | 99.747 | 97.861 |
| 174.980 | 4. | 0.092 | 99.839 | 98.536 |
| 180.500 | 3. | 0.069 | 99.908 | 99.093 |
| 186.020 | 1. | 0.023 | 99.931 | 99.296 |
| 191.540 | 1. | 0.023 | 99.954 | 99.517 |
| 197.060 | 2. | 0.046 | 100.000 | 100.000 |

| | |
|---|---|
| DN = | 77.66 |
| DA = | 101.81 |
| D50 = | 76.56 |
| K = | 6 |
| A(K) = | 0.0991 |
| FQS = | 1.7952 |
| DN/D50 = | 1.0144 |
| DA/D50 = | 1.3298 |
| DA/DN = | 1.3110 |

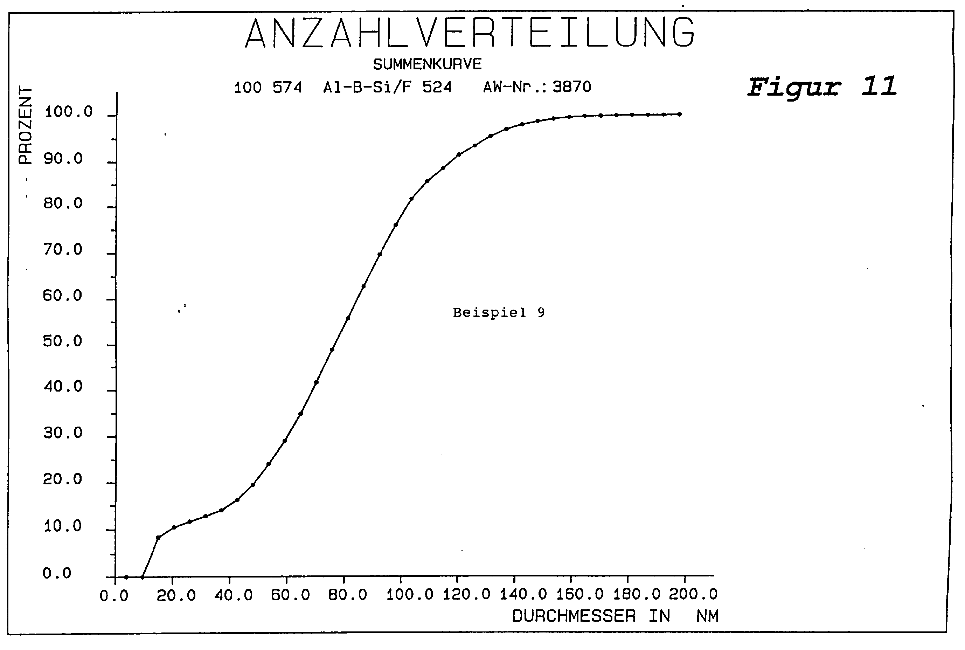

Diese Daten sind in den Figuren 11 bis 16 graphisch dargesteilt. Es zeigen:
Figur 11 die Summenkurve der Anzahlverteilung

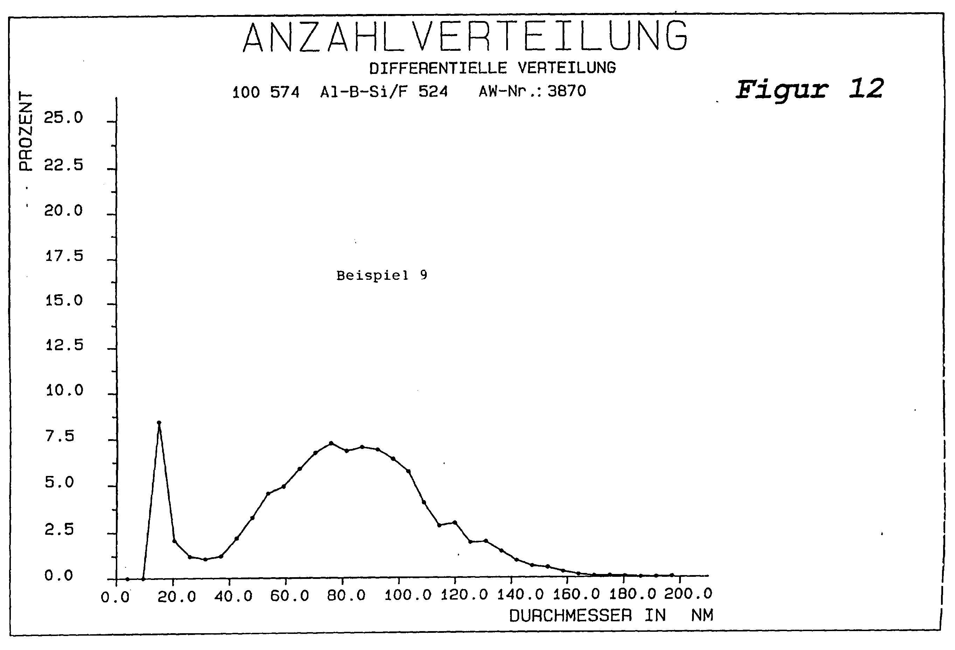

Figur 12 die differentielle Kurve der Anzahlverteilung

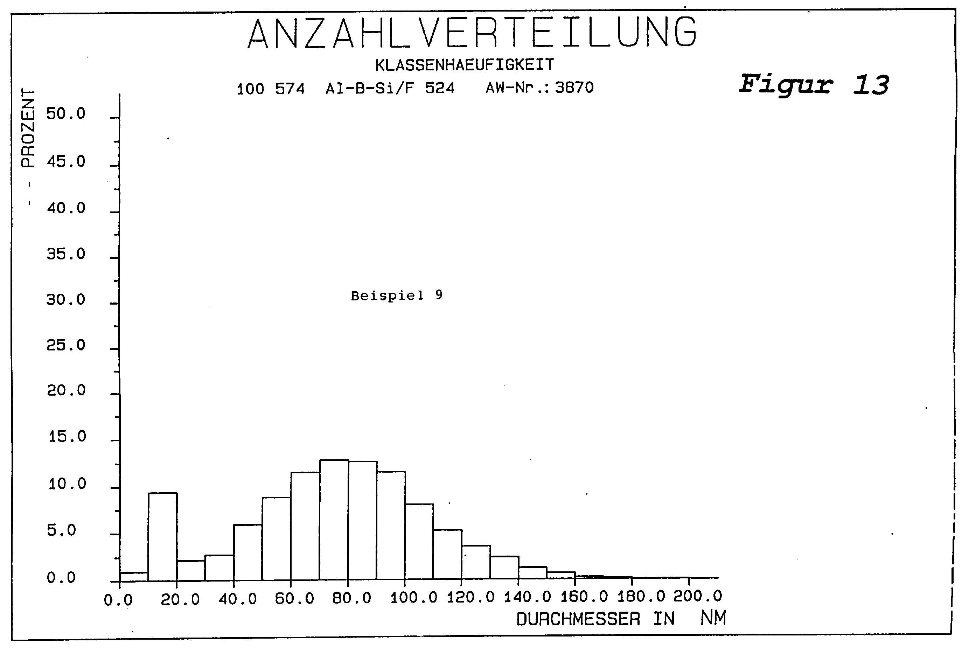

Figur 13 die Klassenhäufigkeit der Anzahlverteilung

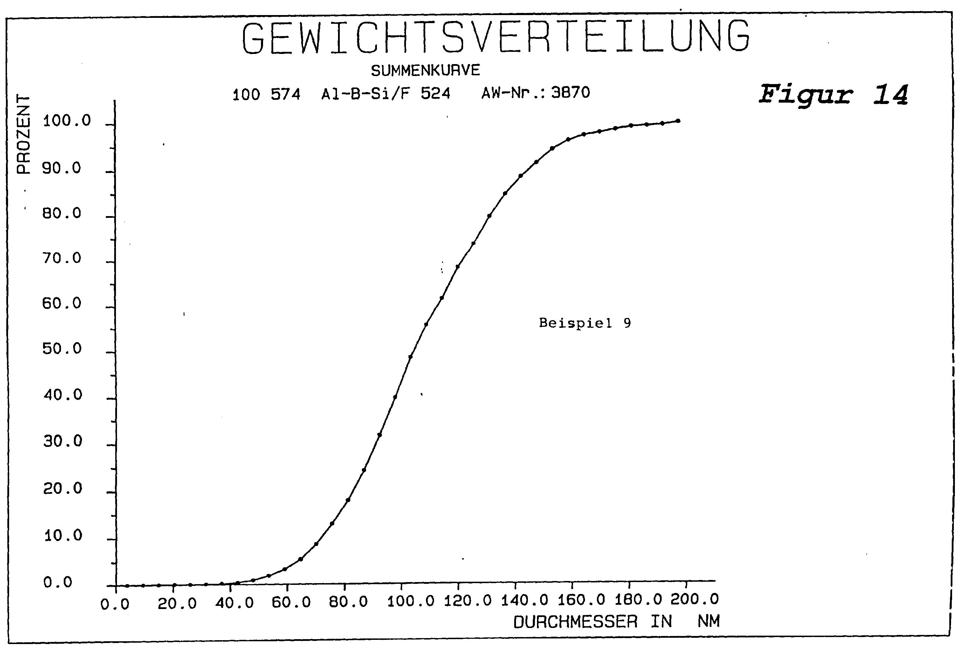

Figur 14 die Summenkurve der Gewichtsverteilung

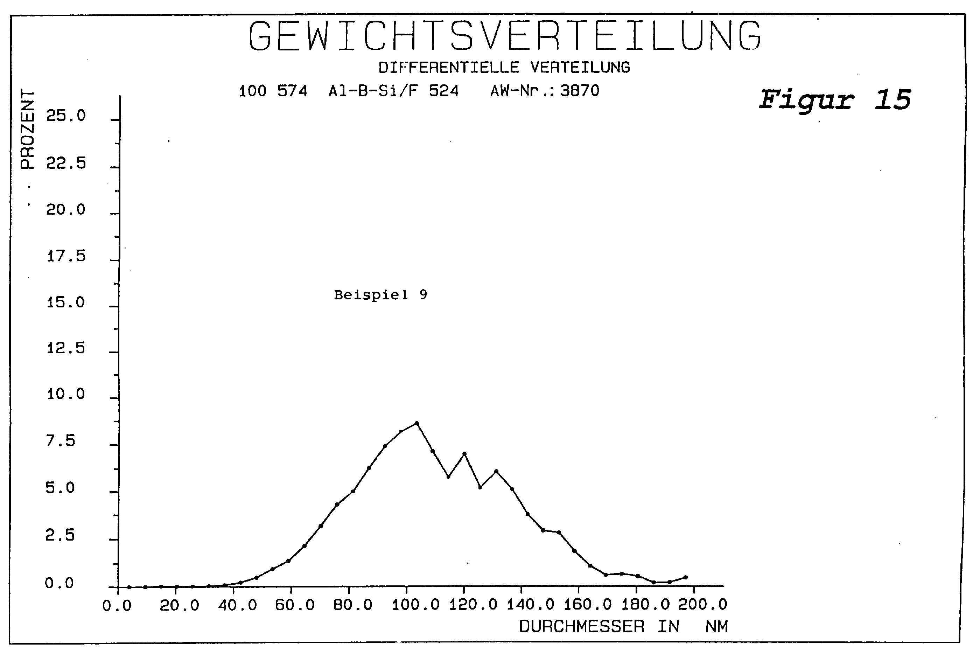

Figur 15 die differentielle Kurve der Gewichtsverteilung

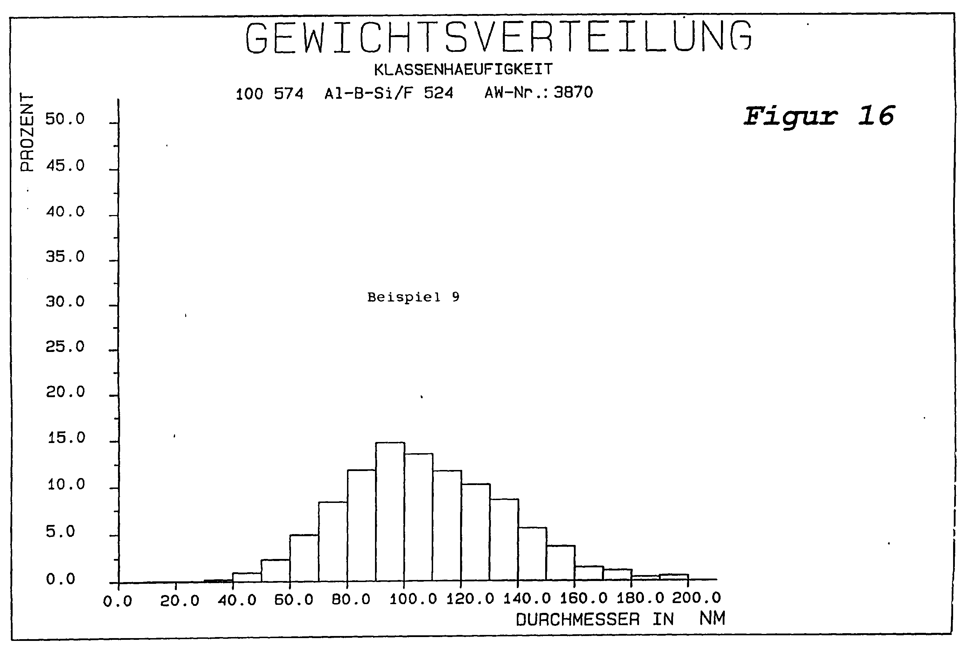

Figur 16 die Klassenhäufigkeit der Gewichtsverteilung

**Tabelle 4**

| Experimentelle Bedingungen und daraus errechnete Flammenparameter bei der Herstellung pyrogener Bor-Silicium-Aluminium-Mischoxide | | | | | | | | | |
|---|---|---|---|---|---|---|---|---|---|
| Nr. | SiCl₄ [kg/h] | BME [kg/h] | AlCl₃ [kg/h] | Luft [Nm³/h] | O₂ [Nm³/h] | H₂ [Nm³/h] | gamma [-] | lambda [-] | BET [m²/g] |
| 5 | 0,876 | 0,231 | 0,056 | 0,938 | 0,196 | 0,254 | 1,95 | 1,10 | 28 |
| 6 | 0,830 | 0,219 | 0,108 | 0,782 | 0,164 | 0,255 | 1,90 | 0,97 | 30 |
| 7 | 0,788 | 0,208 | 0,151 | 0,762 | 0,160 | 0,257 | 1,87 | 0,97 | 27 |
| 8 | 0,721 | 0,190 | 0,232 | 0,842 | 0,176 | 0,259 | 1,78 | 1,10 | 29 |
| 9 | 0,641 | 0,169 | 0,321 | 0,800 | 0,167 | 0,261 | 1,70 | 1,11 | 29 |

- BME =: Borsäuretrimethylester B(OCH₃)₃
- Verhältnis H₂ gamma =: Verhältnis von eingespeistem Wasserstoff im Kern (den in BME enthaltenen Wasserstoff mitberücksichtigend) zu stöchiometrisch benötigtem Wasserstoff
- Verhältnis O₂ lambda =: Verhältnis von eingespeistem Sauerstoff (Luftsauerstoff + zusätzlich eingespeistem O₂) im Brenner zu stöchiometrisch benötigtem Sauerstoff.

**Tabelle 5**

| Analytische Daten der nach Beispiel 5 bis 9 erhaltenen Proben (Al-B-Si-Mischoxid) | | | | | | | | | | |
|---|---|---|---|---|---|---|---|---|---|---|
| **Vor Entsäuerung** | | | | | | **Nach Entsäuerung** | | | | |
| Nr. | BET m²/g | B₂O₃ Gew.-% | Al₂O₃ Gew.-% | TV Gew.-% | GV Gew.-% | BET m²/g | B₂O₃ Gew.-% | Al₂O₃ Gew.-% | TV Gew.-% | GV Gew.-% |
| 5 | 28 | 12,3 | 3,9 | 0,5 | 3,2 | 27 | 13,5 | 4,5 | 0,2 | 2,1 |
| 6 | 30 | 13,9 | 8,3 | 1,6 | 3,3 | 29 | 13,9 | 9,3 | 0,2 | 2,2 |
| 7 | 27 | 14,3 | 12,9 | 0,7 | 3,5 | 29 | 13,0 | 12,9 | 0,6 | 1,7 |
| 8 | 29 | 14,6 | 19,3 | 1,9 | 3,7 | 32 | 13,2 | 19,4 | 1,1 | 1,5 |
| 9 | 27 | 12,9 | 29,0 | 0,6 | 1,9 | 34 | 12,4 | 27,0 | 0,3 | 1,5 |

- TV =: Trocknungsverlust (2 h bei 105 °C, in Anlehnung an DIN/ISO 787/II, ASTM D 280, JIS K 5101/21).
- GV =: Glühverlust (2 h bei 1000 °C, in Anlehnung an DIN 55921, ASTM D 1208, JIS K 5101/23, bezogen auf die 2 h bei 105 °C getrocknete Substanz).

**Tabelle 6**

| Weitere analytische Daten der nach Beispiel 5 bis 9 erhaltenen Proben (Al-B-Si-Mischoxid) | | | | | | | | | | |
|---|---|---|---|---|---|---|---|---|---|---|
| | **Vor Entsäuerung** | | | | | **Nach Entsäuerung** | | | | |
| Nr. | BET m²/g | Cl-Gehalt ppm | pH | Schütt dichte g/l | Stampf-dichte g/l | BET m²/g | Cl-Gehalt ppm | pH | Schütt-dichte g/l | Stampf-dichte g/l |
| 5 | 28 | 150 | 3,47 | 65 | 82 | 27 | 130 | 3,90 | 175 | 236 |
| 6 | 30 | 148 | 3,79 | 76 | 91 | 29 | 85 | 4,06 | 190 | 240 |
| 7 | 27 | 132 | 3,84 | 80 | 97 | 29 | 115 | 4,38 | 210 | 270 |
| 8 | 29 | 223 | 4,21 | 74 | 97 | 32 | 310 | 4,45 | 202 | 255 |
| 9 | 27 | 210 | 4,33 | 75 | 90 | 34 | 414 | 4,55 | 215 | 276 |

- pH =: pH-Wert in 4-prozentiger wäßriger Suspension.

Stampfdichte in Anlehnung an DIN/ISO 787/XI, JIS K 5101/18 (nicht gesiebt).

## Patentansprüche

1. Boroxid-Siliciumdioxid-Mischoxid, dadurch gekennzeichnet, daß es eine BET-Oberfläche 10 bis 80 m²/g, insbesondere 25 bis 50 m²/g aufweist.

2. Boroxid-Siliciumdioxid-Mischoxid gemäß Anspruch 1, dadurch gekennzeichnet, daß es ein weiteres Oxid oder weitere Oxide von Metallen und/oder Metalloiden als Bestandteil des Mischoxides enthalt.

3. Verfahren zur Herstellung des Boroxid-Siliciumdioxid-Mischoxides gemäß Anspruch 1, dadurch gekennzeichnet, daß man Silikonhalogenide oder Organosilikonhalogenide mit der verdampfbaren Borverbindung Borsäuretrimethylester allein oder gemeinsam verdampft, die Dämpfe mit einem Traggas in einer Mischeinheit, vorzugsweise in einem Brenner bekannter Bauart mit Wasserstoff sowie Luft und gegebenenfalls weiteren Gasen wie Sauerstoff und Stickstoff mischt, die Gase in einer Flamme miteinander zur Reaktion bringt, anschließend die heißen Gase und den Feststoff abkühlt, die Gase vom Feststoff abtrennt und gegebenenfalls am Produkt anhaftende Halogenid- oder Rohstoffreste durch eine Wärmebehandlung mit befeuchteter Luft entfernt.

4. Verfahren zur Herstellung des Boroxid-Siliciumdioxid-Mischoxides gemäß Anspruch 2, dadurch gekennzeichnet, daß man Halogenide oder Organohalogenide oder andere organische Verbindungen der Metalle und/oder Metalloide mit der verdampfbaren Borverbindung Borsäuretrimethylester allein oder gemeinam verdampft, die Dämpfe mit einem Traggas in einer Mischeinheit, vorzugsweise in einem Brenner bekannter Bauart mit Wasserstoff sowie Luft und gegebenenfalls weiteren Gasen wie Sauerstoff und Stickstoff mischt, die Gase in einer Flamme miteinander zur Reaktion bringt, anschließend die heißen Gase und den Feststoff abkühlt, die Gase vom Feststoff abtrennt und gegebenenfalls am Produkt anhaftende Halogenid- oder Rohstoffreste durch eine Wärmebehandlung mit befeuchteter Luft entfernt.

5. Verwendung des Boroxid-Siliciumdixoid-Mischoxides gemäß den Ansprüchen 1 oder 2 zur Herstellung von Glas.

## Claims

1. Boron oxide-silicon dioxide mixed oxide, characterised in that it has a BET surface of 10 to 80 m²/g, in particular 25 to 50 m²/g.

2. Boron oxide-silicon dioxide mixed oxide according to claim 1, characterised in that it contains a further oxide or further oxides of metals and/or metalloids as a constituent of the mixed oxide.

3. Process for preparing the boron oxide-silicon dioxide mixed oxide according to claim 1, characterised in that silicon halides or organosilicon halides are mixed with the vaporisable boron compound trimethyl borate alone or together, the vapours together with a carrier gas are vaporised in a mixer unit, preferably in a burner of known construction, with hydrogen as well as air and optionally further gases such as oxygen and nitrogen, the gases are reacted in a flame, the hot gases and the solid are then cooled, the gases are separated from the solid, and halide or raw material residues adhering to the product are optionally removed by a heat treatment with moist air.

4. Process for preparing the boron oxide-silicon dioxide mixed oxide according to claim 2, characterised in that halides or organohalides or other organic compounds of metals and/or metalloids are vaporised with the vaporisable boron compound trimethyl borate alone or together, the vapours together with a carrier gas are mixed in a mixer unit, preferably in a burner of known construction, with hydrogen as well as air and optionally further gases such as oxygen and nitrogen, the gases are reacted in a flame, the hot gases and the solid are then cooled, the gases are separated from the solid, and halide or raw material residues adhering to the product are optionally removed by a heat treatment with moist air.

5. Use of the boron oxide-silicon dioxide mixed oxide according to claim 1 or 2 in glass making.

## Revendications

1. Oxyde mixte d'oxyde de bore et de dioxyde de silicium,
caractérisé en ce qu'
il présente une surface BET de 10 à 80 m²/g, en particulier de 25 à 50 m²/g.

2. Oxyde mixte oxyde de bore/dioxyde de silicium conformément à la revendication 1,
caractérisé en ce qu'
ii renterme un autre oxyde ou d'autres oxydes de métaux et/ou de métalloïdes, comme constituant de l'oxyde mixte.

3. Procédé de préparation de l'oxyde mixte oxyde de bore/dioxyde de silicium conformément à la revendication 1,
caractérisé en ce qu'
on vaporise des halogénures de silicium ou des halogénures d'organosilicium, avec le composé du bore volatilisable, l'ester triméthylique d'acide borique, isolément ou conjointement, en ce qu'on mélange les vapeurs ayant un gaz vecteur dans une unité de mélange, de préférence dans un brûleur de type de construction connue, avec de l'hydrogène ainsi que de l'air et éventuellement d'autres gaz comme de l'oxygène et de l'azote, en ce qu'on amène les gaz en réaction les uns avec les autres dans une flamme, en ce qu'on refroidit ensuite les gaz chauds et les matières solides, en ce qu'on sépare les gaz des matières solides et en ce qu'on élimine les résidus d'halogénure ou de matières premières adhérentes éventuellement au produit, par un traitement par la chaleur avec de l'air humidifié.

4. Procédé de préparation de l'oxyde mixte oxyde de bore/dioxyde de silicium, conformément à la revendication 2,
caractérisé en ce qu'
on vaporise les halogénures ou les organohalogènures ou d'autres composés organiques des métaux et/ou des métalloï-des avec le composé du bore vaporisable, l'ester triméthylique d'acide borique, isolément ou conjointement, en ce qu'on mélange les vapeurs ayant un gaz vecteur dans une unité de mélange, de préférence dans un brûleur de type connu de construction, avec de l'hydrogène ainsi qu'avec de l'air et éventuellement d'autres gaz, comme l'oxygène et l'azote, en ce qu'on amène à la réaction les uns avec les autres les gaz dans une flamme, en ce qu'on refroidit en-suite les gaz chauds et les matières solides, en ce qu'on sépare les gaz des matières solides, et en ce qu'on élimine les résidus d'halogénure ou de matières premières adhérents éventuellement sur le produit par un traitement à la chaleur avec de l'air humidifié.

5. Utilisation de l'oxyde mixte oxyde de bore/dioxyde de silicium conforménent aux revendications 1 et 2, pour la préparation du verre.
